(19) Europäisches Patentamt
European Patent Office
Office européen des brevets

(11) **EP 4 471 469 A1**

(12) **EUROPEAN PATENT APPLICATION**
published in accordance with Art. 153(4) EPC

(43) Date of publication:
04.12.2024  Bulletin 2024/49

(51) International Patent Classification (IPC):
$G02B\ 6/00^{(2006.01)}$     $G02B\ 27/01^{(2006.01)}$
$G03B\ 21/00^{(2006.01)}$     $G03B\ 21/14^{(2006.01)}$

(21) Application number: 23746493.8

(22) Date of filing: 30.01.2023

(86) International application number:
PCT/CN2023/073887

(87) International publication number:
WO 2023/143616 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.01.2022  CN 202210114528

(71) Applicant: Zhuhai Mojie Technology Co., Ltd.
Zhuhai, Guangdong 519085 (CN)

(72) Inventors:
• SHAO, Chendi
Zhuhai, Guangdong 519085 (CN)
• ZHOU, Xing
Zhuhai, Guangdong 519085 (CN)
• LAN, Fuyang
Zhuhai, Guangdong 519085 (CN)

(74) Representative: Agca Kizil, Tugce et al
Camiavlu Mah. Hamdi Yuzak Cad. Yesim Sitesi
No: 22/A
545. Sok.
48700 Marmaris, Mugla (TR)

(54) **OPTICAL WAVEGUIDE MODULE AND AR DISPLAY APPARATUS**

(57)    An optical waveguide device and an AR display apparatus are provided. The optical waveguide device includes a light source structure, an optical waveguide structure, at least one coupling-in structure and at least one coupling-out structure. An initial light beam can be coupled into the optical waveguide structure through the coupling-in structure and coupled out multiple coupling-out light beams from the coupling-out structure. A distance between a polygonal vertex of a coupling-out light beam and an adjacent edge of an adjacent coupling-out light beam is not greater than a preset threshold. The adjacent edge is an edge of the adjacent one of the coupling-out light beams having a smallest distance to the polygonal vertex of the one of the coupling-out light beams, and the distance is a non-negative number. When the initial light beam exit pupil expands, less overlap and gaps are formed by the polygonal coupling-out light beams, and the energy distribution uniformity is improved.

Fig. 5

## Description

## TECHNICAL FIELD

The present disclosure relates to the technical field of optical waveguides, and in particularly to an optical waveguide device and an AR display apparatus.

## BACKGROUND

In the fields of augmented reality (AR) and mixed reality (MR), compared with Bird Bath (BB, semi-reflective and semi-transmissive), insect eye (off-axis reflective), and freeform prism and other display solutions, the optical waveguide solution is thinner and lighter, and has a lager eye box, so it has a broader application prospect. In the fields of optical waveguide solutions, compared with an array optical waveguide using partial transflective film, the production and preparation process of the diffractive optical waveguide is less difficult, and there is no grid-like dark stripes when realizing two-dimensional pupil expansion (exit pupil expansion in two dimensions). Therefore, the diffractive optical waveguides are more popular.

The diffractive optical waveguides are typically provided with coupling-in region and coupling-out region, and may also be provided with one or more intermediate partitions or turning areas. The coupling-in region of the diffractive waveguide can convert a free-space light beam (projected from a light engine to the optical waveguide) into a light beam that is transmitted in total reflection in the optical waveguide substrate. The coupling-out region of the diffractive waveguide performs a reversed process, converting part of the light beam transmitted in the form of total reflection into a free-space light beam received by the human eye. The deflecting areas (when present) enables part of the light beam transmitted in the form of total reflection to change its transmission direction. Thus, it continues to be transmitted in the form of total reflection in the new direction. When part of the light transmitted by total reflection changes its transmission direction, the other part of the light transmission direction remains unchanged, thus an exit pupil expansion is completed.

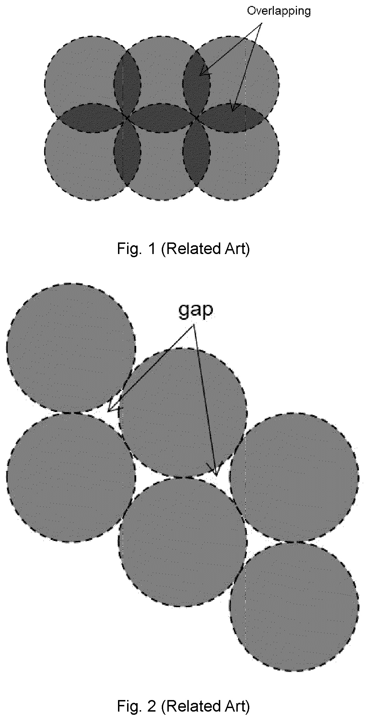

In the related art, as shown in FIG. 1 and FIG. 2, the shape of the exit pupil aperture of the light engine lens is circular, and the shape of the coupling area is usually also circular. Therefore, when the exit pupil is expanded, gaps or overlaps are likely to appear between multiple light spots, resulting in uneven energy distribution of the coupled light, which will produce uneven brightness and/or color when viewed by the human eye.

Therefore, the existing technology needs to be improved and developed.

## SUMMARY

The present disclosure, in view of the above defects of the prior art, provides an optical waveguide device and an AR display apparatus to solve the problem of uneven energy distribution of the optical waveguide device in the related art.

The technical solutions adopted by the present disclosure to solve technical problems are as follows: an optical waveguide device, includes at least one light source structure capable of generating an initial light beam, the initial light beam has a cross-section of a polygon, the polygon has a number of sides greater than 3; an optical waveguide structure, located in a light emitting direction of the at least one light source structure; and at least one coupling-in structure and at least one coupling-out structure, which are arranged in the optical waveguide structure; the initial light beam is configured to be coupled into the optical waveguide structure through the at least one coupling-in structure, and coupled out a plurality of coupling-out light beams from the at least one coupling-out structure; and a distance between a polygonal vertex of a polygonal cross-section of one of the coupling-out light beams and an adjacent edge of another polygonal cross-section of an adjacent one of the coupling-out light beams is not greater than a preset threshold; the adjacent edge is an edge of the another polygonal cross-section of the adjacent one of the coupling-out light beams having a smallest distance to the polygonal vertex of the one of the coupling-out light beams, and the distance is a non-negative number.

In some embodiments, the polygon satisfies the following formula:

$$1 \leq \frac{\pi \left(\frac{D_{max}}{2}\right)^2}{S} \leq 20$$

In the above formula, $\pi$ is the ratio of a circumference of a circle to the diameter of the circle; $D_{max}$ indicates the diameter of a circle circumscribing the polygon; and S indicates the area of the polygon.

The distance between the polygonal vertex of the polygonal cross-section of the one of the coupling-out light beams and the adjacent edge of the another polygonal cross-section of the adjacent one of the coupling-out light beams is 0; the polygon is a rectangle or a hexagon having parallel edges; and the rectangle satisfies the following formula: $1 \leq \frac{L}{W} \leq 15$, where L represents length of long side of the rectangle and W represents length of short sides of the rectangle.

In some embodiments, the rectangle is a square; and the hexagon having parallel sides is a regular hexagon.

In some embodiments, the polygon is a quasi-square shape or a quasi-hexagon shape, and the distance between the polygonal vertex of the one of the coupling-out light beams and the adjacent edge of the adjacent one of the coupling-out light beams is 0; the quasi-square shape is formed of a regular tetragon having four corners that are chamfered to form chamfered corners; the quasi-hexagon shape is formed of a regular hexagon having six corners that are chamfered to form chamfered corners; and the chamfered corners each includes multiple straight line segments and/or curved line segments connected together.

In some embodiments, the at least one light source structure includes: an image source structure configured to emit a light beam; a projection device located in a light emitting direction of the image source structure; and a stop located in a projection direction of the projection device; and the stop includes an aperture with a polygon shape.

In some embodiments, the image source structure is selected from at least one of an LED image source structure, an LCD image source structure, a DLP image source structure, an LCOS image source structure, an LBS MEMS image source structure, or an FSD image source structure.

In some embodiments, the optical waveguide structure includes at least one of a glass waveguide substrate, a resin waveguide substrate, a plastic waveguide substrate, and a transparent ceramic waveguide substrate; and/or the at least one coupling-in structure includes a surface relief grating and/or a volume Bragg grating; the at least one coupling-out structure includes a surface relief grating and/or a volume Bragg grating; the surface relief grating adopts a fixed refractive index material or a gradient refractive index material; the volume Bragg grating adopts a liquid crystal material or a silver halide material; and/or a film layer is arranged on an upper side and/or a lower side of the at least one coupling-in structure; the film layer includes a dielectric film and/or a metal film, the film layer being located between the optical waveguide structure and the coupling-in structure and/or located on one side of the at least one coupling-in structure distant from the optical waveguide structure; and/or a film layer is arranged on an upper side and/or a lower side of the coupling-out structure; the film layer includes a dielectric film and/or a metal film, the film layer being located between the optical waveguide structure and the coupling-out structure and/or located on one side of the at least one coupling-out structure distant from the optical waveguide structure.

In some embodiments, the at least one coupling-in structure is arranged on one side or both sides of the optical waveguide structure; and/or the at least one coupling-out structure is arranged on one side or both sides of the optical waveguide structure; and/or the optical waveguide device further includes a deflecting structure arranged on the optical waveguide structure, and the initial light beam coupled into the at least one coupling-in structure is transmitted to the at least one coupling-out structure after passing through the deflecting structure, the deflecting structure being arranged on one side or both sides of the optical waveguide structure; and/or the optical waveguide structure is a single-layer optical waveguide or a multiple-layer optical waveguide; when the optical waveguide structure is the multiple-layer optical waveguide, a structure of each layer of the optical waveguide is the same or different.

In another aspect, an AR display apparatus is provided. The AR display apparatus includes the optical waveguide device described above.

According to the technical solutions of embodiments of the present disclosure, the initial light beam generated by the light source structure is a polygonal light beam, the coupling-out light beams of the coupling-out structure are also polygonal light beams. When an initial light beam exit pupil expands to form the plurality of coupling-out light beams, the distance between the polygonal vertex of the polygonal cross section of the coupling-out light beams and the adjacent edge of the polygonal cross section of the adjacent coupling-out light beams is less than the preset threshold, such that laps and gaps formed between the polygonal coupling-out light beams are reduced, and energy distribution uniformity is increased.

## BRIEF DESCRIPTION OF THE DRAWINGS

FIG. 1 is a schematic view illustrating laps of coupling-out light beams in related art.
FIG. 2 is a schematic view illustrating presence of a gap in coupling-out light beams in related art.
FIG. 3 is a schematic view illustrating a first type of structure of a stop according to an embodiment of the present disclosure.
FIG. 4 is a schematic view illustrating a second type of structure of a stop according to an embodiment of the present disclosure.
FIG. 5 is a schematic view illustrating coupling-out light beams of a square shape according to an embodiment of the present disclosure.
FIG. 6 is a schematic view illustrating coupling-out light beams of a parallelogram shape according to an embodiment of the present disclosure.
FIG. 7 is a schematic view illustrating coupling-out light beams of a trapezoidal shape according to an embodiment of the present disclosure.
FIG. 8 is a schematic view illustrating coupling-out light beams of a pentagonal shape according to an embodiment of the present disclosure.
FIG. 9 is a schematic view illustrating coupling-out light beams of a hexagonal shape having parallel sides according to an embodiment of the present disclosure.
FIG. 10 is a first schematic view illustrating coupling-out light beams of a dodecagonal shape having parallel sides according to an embodiment of the present disclosure.
FIG. 11 is a second schematic view illustrating coupling-out light beams of a dodecagonal shape having parallel sides according to an embodiment of the present disclosure.

FIG. 12 is a schematic view illustrating coupling-out light beams of a quasi-square shape according to an embodiment of the present disclosure.

FIG. 13 is a schematic view illustrating coupling-out light beams of a quasi-hexagon shape according to an embodiment of the present disclosure.

FIG. 14 is a first schematic view illustrating a chamfer according to an embodiment of the present disclosure.

FIG. 15 is a second schematic view illustrating a chamfer according to an embodiment of the present disclosure.

FIG. 16 is a third schematic view illustrating a chamfer according to an embodiment of the present disclosure.

FIG. 17 is a schematic view illustrating a first type of structure of an optical waveguide structure according to an embodiment of the present disclosure.

FIG. 18 is a schematic view illustrating a second type of structure of an optical waveguide structure according to an embodiment of the present disclosure.

FIG. 19 is a schematic view illustrating a third type of structure of an optical waveguide structure according to an embodiment of the present disclosure.

FIG. 20 is a schematic view illustrating a fourth type of structure of an optical waveguide structure according to an embodiment of the present disclosure.

FIG. 21 is a schematic view illustrating a fifth type of structure of an optical waveguide structure according to an embodiment of the present disclosure.

FIG. 22 is a schematic view illustrating a sixth type of structure of an optical waveguide structure according to an embodiment of the present disclosure.

FIG. 23 is a side elevational view illustrating an optical waveguide structure according to an embodiment of the present disclosure.

List of Reference Signs:

10, coupling-out light beams; 11, polygonal vertex; 12, adjacent edge; 13, chamfer; 20, optical waveguide structure; 30, coupling-in structure; 40, coupling-out structure; 50, deflecting structure; 60, stop; 61, aperture; 70, film layer.

**DETAILED DESCRIPTION**

To make the objectives, technical solutions, and advantages of the present disclosure clearer and more definite, a detailed description of embodiments of the present disclosure will be further provided below with reference to the attached drawings and embodiments. It is appreciated that the embodiments described herein are provided solely for illustrating the present disclosure and are not to limit the present disclosure.

It is noted that when a component is referred to as being "fixed" or "arranged" on another component, it can be directly set on another component, or it can be indirectly set on another component. When a component is referred to as being "connected" to another component, it can be directly connected to another component or it can be indirectly connected to another component.

It is also noted that, in the drawings of the embodiments of the present invention, the same or similar reference signs correspond to the same or similar components; in the description of the present invention, it is appreciated that the terms that indicate directional or positional relationships, such as "up", "down", "left", and "right", are based on the directional or positional relationship illustrated in the attached drawings, and are adopted for easily describing the present invention and simplifying the description, rather than suggesting or implying a device or an element indicated thereby must exhibit a specific direction or must be constructed or operated in a specific direction. Thus, the terms that are taken to describe positional relationships in the attached drawings are adopted only for illustrating and explaining and are not construed as limiting to the patent. For those having ordinary skills in the art, the specific meanings of such terms can be learned based on a specific situation.

Referring jointly to FIGS. 1-22, the present disclosure provides some embodiments of an optical waveguide device.

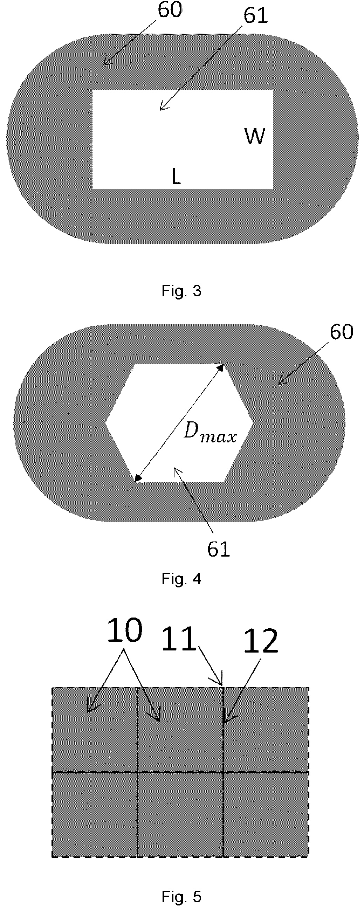

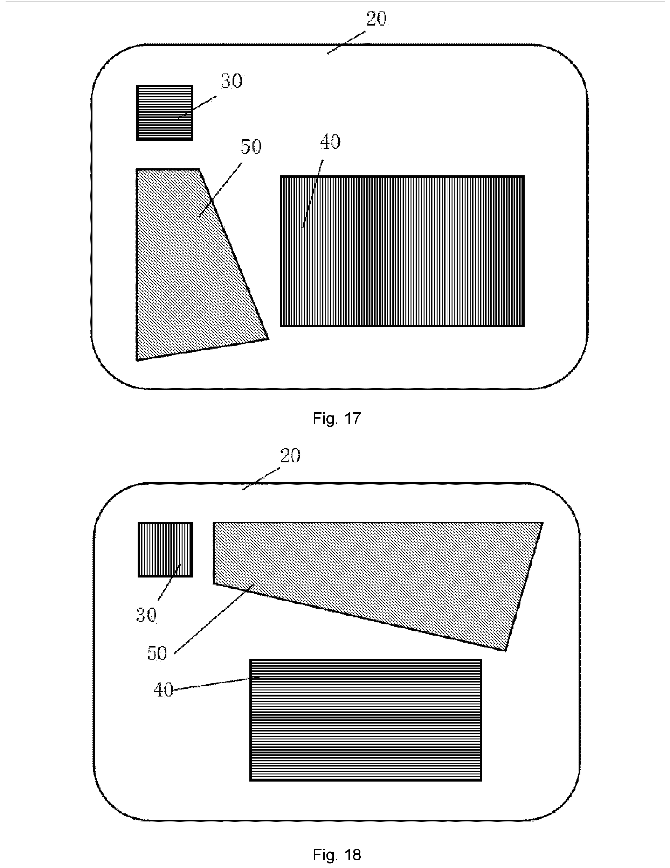

As shown in FIGS. 5 and 17, the optical waveguide device according to an embodiment of the present disclosure includes:

a light source structure configured to generate an initial light beam, the initial light beam having a cross-section of a polygon, the number of sides of the polygon being greater than 3 (it is noted that chamfered corners of a quasi-polygon shape are not included in the calculation of the number of sides, meaning the sides of a quasi-polygon shape mentioned here do not include chamfering sides);

an optical waveguide structure 20, which is located in a light emitting direction of the light source structure; and

a coupling-in structure 30 and a coupling-out structure 40, which are arranged in the optical waveguide structure 20.

The initial light beam is configured to be coupled into the optical waveguide structure 20 through the coupling-in structure 30 and coupled out a plurality of coupling-out light beams 10 from the coupling-out structure 40.

A distance between a polygonal vertex 11 of a polygonal cross-section of one coupling-out light beam 10 and an adjacent edge 12 of another polygonal cross-section of an adjacent coupling-out light beam 10 is less than or equal to a preset threshold; the adjacent edge 12 of another polygonal cross-section refers to an edge of the adjacent coupling-out light beam 10 having a smallest distance to the polygonal vertex 11 of the polygonal cross-section of the one coupling-out light beam 10, the distance being a non-negative number.

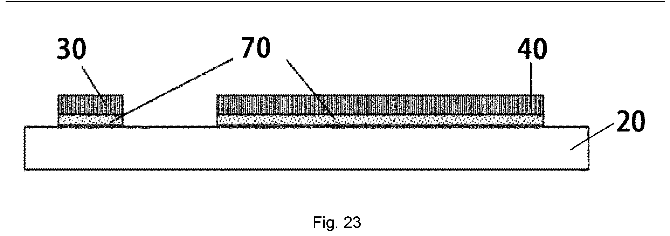

It should be noted that the light source structure refers to a structure capable of emitting a light beam. As shown in FIG. 23, the optical waveguide structure 20 refers to a structure capable of transmitting the light beam in an interior thereof. The coupling-in structure 30 refers to a structure capable of coupling the light beam into the optical waveguide structure 20. The coupling-out structure 40 refers to a structure capable of coupling the light beam out of the optical waveguide structure 20. The polygonal vertex 11 of a polygonal cross-section of the coupling-out light beams 10 is an intersecting point of two adjacent edges of the polygonal cross-section of the one of the coupling-out light beams, or an intersecting point of extension lines of the two adjacent edges of the polygonal cross-section of the one of the coupling-out light beams (an intersecting point of extension lines of two adjacent edges of a quasi-polygon shaped cross-section being regarded as a polygonal vertex of the quasi-polygon shaped cross-section). The number of the polygonal vertexes 11 is equal to the number of the sides of the polygon (not including the chamfering sides of a quasi-polygon shape).

Generally, for a certain polygonal vertex 11 of a coupling-out light beam 10 with a polygonal cross-section, there is, among all the edges of the polygonal cross section of an adjacent coupling-out light beam 10, one edge having a shortest distance to the certain polygonal vertex 11, and as such, such an edge is taken as the adjacent edge 12. When a polygonal vertex 11 of the polygonal cross section of a coupling-out light beam 10 coincides with a polygonal vertex 11 of the polygonal cross section of an adjacent coupling-out light beam 10, the polygonal cross section of the adjacent coupling-out light beam 10 presents two edges thereof that are of the shortest distance relative to the polygonal vertex 11, meaning the polygonal cross section of the adjacent coupling-out light beam 10 presents two adjacent edges, and the two adjacent edges each have a distance that is 0 relative to the polygonal vertex 11 of the coupling-out light beam 10. Any polygonal vertex 11 of the polygonal cross section of the coupling-out light beam 10 can be separated from (where the polygonal vertex 11 is located outboard of the polygonal cross section of the adjacent coupling-out light beam 10), coincides with (where the polygonal vertex 11 is located on one edge of the polygonal cross section of the adjacent coupling-out light beam 10 or an extension line thereof), or overlaps (where the polygonal vertex 11 is located inboard of the polygonal cross section of the adjacent coupling-out light beam 10) the adjacent edge 12. For coincidence, the distance between the polygonal vertex 11 and the adjacent edge 12 is 0, and for separation or overlapping, the distance between the polygonal vertex 11 and the adjacent edge 12 is not 0.

As the initial light beam generated by the light source structure is a polygonal light beam, the coupling-out light beams 10 of the coupling-out structure 40 are also polygonal light beams. When an initial light beam exit pupil expands to form the plurality of coupling-out light beams 10, the distance between the polygonal vertex 11 of the polygonal cross section of the coupling-out light beams 10 and the adjacent edge 12 of the polygonal cross section of the adjacent coupling-out light beams 10 is less than the preset threshold, such that laps and gaps formed between the polygonal coupling-out light beams 10 are reduced, and energy distribution uniformity is increased. The initial light beam of the light source structure can be visible light, such as one or a combination of multiple ones of red light, blue light, green light, or light with other colors.

It is noted that here, the polygon refers to a polygon of which the number of sides thereof (not including the chamfering sides of quasi-polygon shapes) is greater than 3, meaning the number of the sides of the polygon can be 4, 5, 6, 7, and so on. When a triangular light beam exit pupil expands, the triangle does not rotate, and consequently, more laps and gaps may be formed.

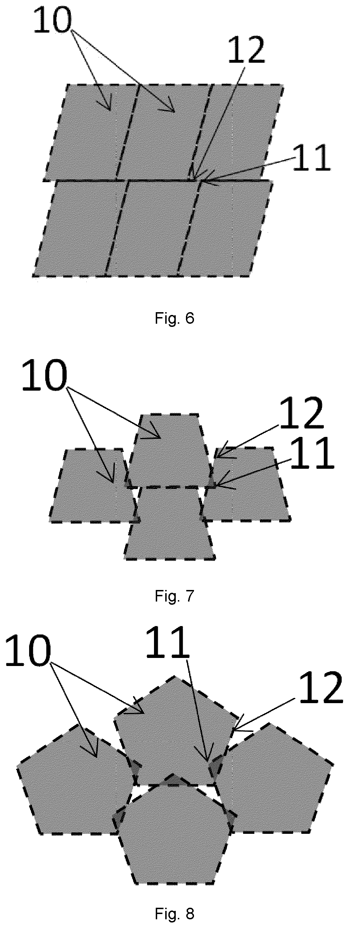

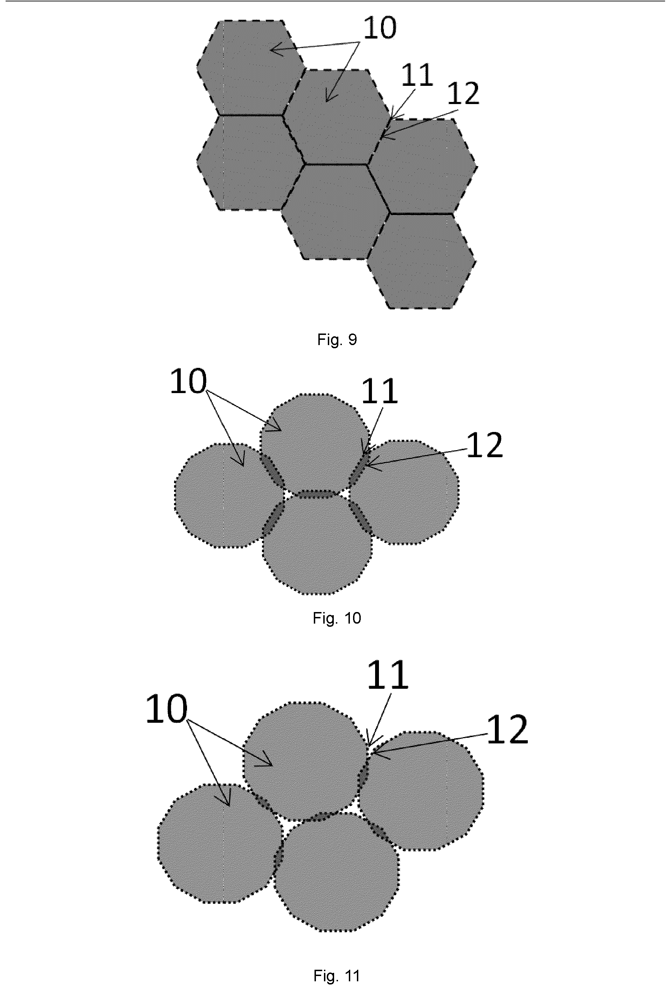

As shown in FIGS. 5-7, when a quadrilateral shape is adopted, if the quadrilateral shape is a parallelogram (as specifically shown in FIGS. 5 and 6), then the distances between the polygonal vertexes 11 and the adjacent edges 12 are 0, and there is no lap and there is no gap; if the quadrilateral shape is a quadrilateral shape other than a parallelogram, for example, a trapezoid as shown in FIG. 7, then the distances between the polygonal vertexes 11 and the adjacent edge 12 cannot be exactly 0, and there may be certain laps or gaps; not exactly 0 refers to a condition that there is a distance, not equal to zero, between all polygonal vertexes 11 of the polygonal cross section of a coupling-out light beam 10 and the adjacent edges corresponding thereto. As shown in FIG. 8, when a pentagon is adopted, the distances between the polygonal vertexes 11 and the adjacent edges 12 are not all 0, and there may be certain laps or gaps. As shown in FIG. 9, when a hexagon is adopted, if the hexagon is one having parallel sides, the distances between the polygonal vertexes 11 and the adjacent edges 12 are 0, and there is no lap and gap; if the hexagon is a hexagon other than one having parallel sides, the distances between the polygonal vertexes 11 and the adjacent edges 12 are not exactly 0, and there may be certain laps or gaps. When a heptagon or a polygon having more than seven sides is adopted (as shown in FIGS. 10-11, where a dodecagon is shown), the distances between the polygonal vertexes 11 and the adjacent edges 12 are not exactly 0, and there may be certain laps or gaps. In each embodiment of the present disclosure, the polygonal light beams form, for exit pupil expansion, less laps and gaps, and uniformity of the light beams is higher.

In a preferred way of implementation of the embodiments of the present disclosure, as shown in FIG. 4, the polygon satisfies the following formula:

$$1 \leq \frac{\pi \left(\frac{D_{max}}{2}\right)^2}{S} \leq 20$$

In the above formula, $\pi$ is the ratio of a circumference of a circle to the diameter of the circle; Dmax indicates the diameter of a circle circumscribing the polygon; and S indicates the area of the polygon.

Specifically, to ensure relatively high energy utilization of the initial light beam generated by the light source structure and preclude polygonal light beam of low energy utilization, when $\frac{\pi\left(\frac{D_{max}}{2}\right)^2}{S} > 20$, the area of the polygon accounts only for relatively small proportion of the area of the circumscribed circle and the energy utilization is relatively low.

In a preferred way of implementation of the embodiments of the present disclosure, as shown in FIGS. 5, 6, and 9, the distances between the polygonal vertexes 11 of the polygonal cross section of the coupling-out light beams 10 and the adjacent edges 12 of the polygonal cross section of the adjacent coupling-out light beams 10 are 0, forming densely arranged light beams.

Specifically, densely arranged light beams refer to light beams having no lapping portion or gap portion. When the distances between the polygonal vertexes 11 of the polygonal cross section of the coupling-out light beams 10 and the adjacent edges 12 of the polygonal cross section of the adjacent coupling-out light beams 10 are 0, there is no lap and gap between individual ones of the coupling-out light beams 10, and a dense arrangement of the light beams is formed, and the uniformity of the light beams is the highest. When the polygon is a parallelogram or a hexagon having parallel sides, it is also possible to fulfill the distances between the polygonal vertexes 11 of the polygonal cross section of the coupling-out light beams 10 and the adjacent edge 12 of the polygonal cross section of the adjacent coupling-out light beams 10 being 0.

In a preferred way of implementation of the embodiments of the present disclosure, as shown in FIGS. 5 and 9, among parallelograms, a rectangular light beam has relatively high utilization of energy, and thus, the polygon adopts a rectangle. By adopting a rectangle or a hexagon having parallel sides to serve as the polygon, a dense arrangement of the light beams can be achieved, and the energy utilization of the light beams is relatively high.

In a preferred way of implementation of the embodiments of the present disclosure, as shown in FIG. 3, the rectangle satisfies the following formula:

$$1 \leq \frac{L}{W} \leq 15$$

where L represents the long side of the rectangle and W represents the short side of the rectangle.

To further enhance the utilization of energy, when the ratio between the long side and the short side of the rectangle is held within a specific range, the energy utilization of the rectangular light beams is relatively high.

In a preferred way of implementation of the embodiments of the present disclosure, as shown in FIG. 5, the rectangle is a square; and the hexagon having parallel sides is a regular hexagon. When the polygon adopts a square or a regular hexagon, the energy utilization can be further improved, and a dense arrangement of the light beams can be formed.

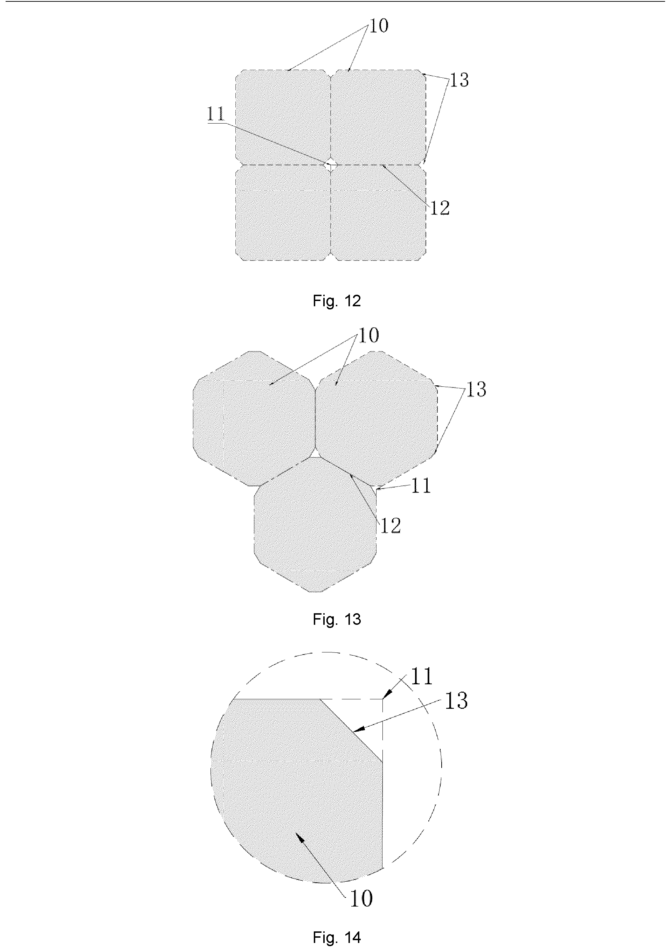

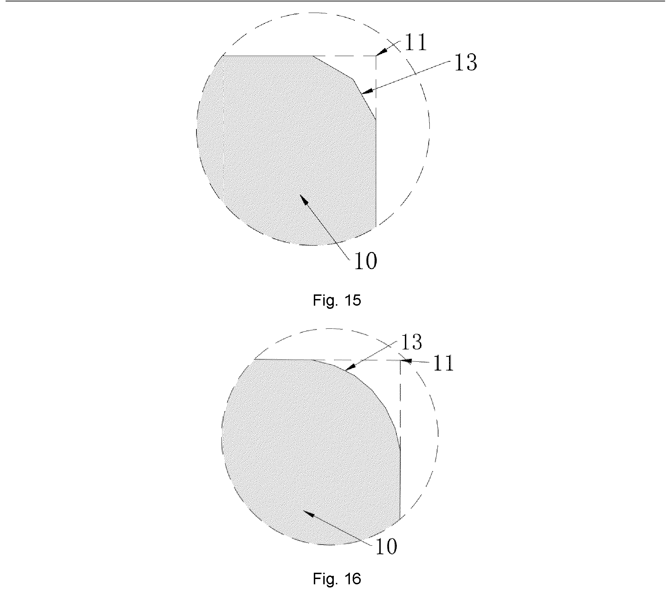

In a preferred way of implementation of the embodiments of the present disclosure, the polygon may also adopt a quasi-square shape or a quasi-hexagon shape, and the distances between the polygonal vertexes of the coupling-out light beams and the adjacent edges of the adjacent coupling-out light beams are 0, and laps and gaps of the light beams are reduced. The quasi-square shape is formed of a regular tetragon of which the four corners are chamfered, and the quasi-hexagon shape is formed of a regular hexagon of which the six corners are chamfered, and the chamfered corners are each a chamfer made up of multiple straight line segments and/or curved line segments connected together. As shown in FIGS. 12 and 14-16, the four corners of the quasi-square shape are each formed of a chamfer 13, and the chamfers 13 are each a one-line-segment chamfer 13 (as specifically shown in FIG. 14), and as such, the quasi-square shape becomes an octagon; if the chamfers 13 are each a two-line-segment chamfer 13 (as specifically shown in FIG. 15), then the quasi-square shape becomes a dodecagon. Of course, the number of line segments included in each of the chamfers 13 can be set as desired. When the number of the line segments becomes infinitely large, then an arc chamfer can be formed.

In a preferred way of implementation of the embodiments of the present disclosure, the light source structure includes:

an image source structure configured to emit a light beam;

a projection device located in a light emitting direction of the image source structure; and

a stop 60 located in a projection direction of the projection device;

In some embodiments, the stop 60 defines an aperture 61 which is formed as a polygonal aperture.

The image source structure refers to a device that is capable of emitting light to form an image, and the projection device refers to a device that is capable of projecting a light beam to a plane. The plane is a projection plane. The stop 60 refers to a device that provides an effect of limiting transmitting of the light beam and generally adopts an aperture stop, and the aperture 61 is defined in the stop 60. Light emitted from the image source structure is projected outward by means of the projection device and travels through the stop 60 to be projected onto the coupling-in structure 30.

In some embodiments, the stop 60 includes an external circumferential portion, an internal circumferential portion, and an annular main body. The annular main body connects the external circumferential portion with the internal circumferential portion. The internal circumferential portion surrounds and defines the aperture 61, and the aperture 61 is a polygon. When the aperture stop of a relay projection lens is a polygon, the optical lens of the projection lens can be subjected to non-circular processing, such as trimming, edging, and special-shaped injection molding in order to reduce the size and weight of the relay projection lens. The present disclosure uses a non-circular relay projection lens and forms an initial light beam of a polygon, which correspond to the non-circular outer shape of the coupling-in structure of the optical waveguide so as to fulfill dense arrangement for exit pupil expansion, improving the uniformity of energy distribution of the couple-out light and reducing the size of the entire device.

In a preferred way of implementation of the embodiments of the present disclosure, the image source structure is selected from at least one of an LED image source structure, an LCD image source structure, a DLP image source structure, an LCOS image source structure, an LBS MEMS image source structure, or an FSD image source structure.

Specifically, the LED image source structure refers to an image source structure using an LED as a light source. The LCD image source structure refers to a liquid crystal display-based image source structure, and LCD stands for Liquid Crystal Display. The DLP image source structure refers to a digital light processing-based image source structure, and DLP stands for Digital Light Processing. The LCOS image source structure refers to an LCOS-based image source structure, and LCOS (Liquid Crystal on Silicon) is an active dot matrix reflective liquid crystal display technology. The LBS MEMS image source structure refers to a laser beam scanning micro electro mechanical systems-based image source structure, and LBS MEMS stands for Laser Beam Scanning Micro Electro Mechanical Systems. The FSD image source structure refers to a fiber scanning display based-image source structure, and FSD stands for Fiber Scanning Display.

The LED image source structure adopts a micro LED image source structure, a mini-LED image source structure, or a micro OLED image source structure. The LED image source structure is an active light emitting device and requires no additional illumination light source and can form the image source structure alone.

In a preferred way of implementation of the embodiments of the present disclosure, the optical waveguide structure 20 includes at least one of a glass waveguide substrate, a resin waveguide substrate, a plastic waveguide substrate, and a transparent ceramic waveguide substrate. The plastic waveguide substrate can be for example a poly (methyl methacrylate) (PMMA) waveguide substrate and a polycarbonate (PC) waveguide substrate. The optical waveguide structure 20 may adopt a single-layer substrate or a multiple-layer substrate. When a multiple-layer substrate is adopted, optical grating structures of each layer of the substrate (where the optical grating structures include at least one of a coupling-in structure 30, a coupling-out structure 40, and a deflecting structure 50) can be the same or different.

In a preferred way of implementation of the embodiments of the present disclosure, the coupling-in structure 30 includes a surface relief grating and/or a volume Bragg grating. The coupling-out structure 40 includes a surface relief grating and/or a volume Bragg grating. The coupling-in structure 30 and the coupling-out structure 40 can be selected to be the surface relief grating and/or the volume Bragg grating as desired.

In a preferred way of implementation of the embodiments of the present disclosure, the surface relief grating includes: at least one of a straight groove grating layer, a helical tooth grating layer, a blazed grating layer, a stepped grating layer, a curved-surface grating layer, and a volume holographic grating layer.

Specifically, the cross-section of the grating groove in the straight groove grating layer is rectangular, and the corners of the rectangle can have a chamfer, such as a circular chamfer, and the like. The cross-section of the grating groove in the helical tooth grating layer is parallelogram or trapezoidal. The cross-section of the grating groove in the blazed grating layer is triangular. The cross-section of the grating groove in the stepped grating layer is step-shaped. The cross-section of the grating groove in the curved-surface grating layer is arc-shaped, and here, the arc shape includes at least one curve, and when there are multiple curves, the multiple curves are connected in turn. In addition to curves, the arc shape may also include straight lines, and the straight lines are connected to curves. Different grating layers may be employed according to the shape of the grating groove to be determined.

The surface relief grating adopts a fixed refractive index material or a gradient refractive index (GRIN) material. The volume Bragg grating adopts a liquid crystal material (including liquid crystal dispersion polymer and the likes) or a silver halide material. The refractive index of the coupling-in structure 30 and the refractive index of the coupling-out structure 40 are set as required.

Specifically, the coupling-in structure 30 is arranged on one side or both sides of the optical waveguide structure 20, and can also be arranged in the interior of the optical waveguide structure 20. The coupling-out structure 40 is arranged on one side or both sides of the optical waveguide structure 20, and can also be arranged in the interior of the optical waveguide structure 20. The coupling-in structure 30 and the coupling-out structure 40 can be arranged on the same side or different sides of the optical waveguide structure 20. The coupling-in structure 30 adopts a one-dimensional grating or a two-dimensional grating, and the coupling-out structure 40 may also adopt a one-dimensional grating or a two-dimensional grating.

In a preferred way of implementation of the embodiments of the present disclosure, the optical waveguide device further includes a deflecting structure 50 arranged on the optical waveguide structure 20. A light beam coupled into the coupling-in structure 30 transmits through the deflecting structure 50 to the coupling-out structure 40. The deflecting structure 50 can be arranged on one side or two sides of the optical waveguide structure 20 and may also be arranged in the interior of the optical waveguide structure 20. As shown in FIGS. 17 and 18, the coupling-in structure 30 is arranged at a location corresponding to the upper left corner of the coupling-out structure 40, and the deflecting structure 50 is arranged at a location corresponding to the left side edge or the upper side edge of the coupling-out structure 40. Of course, in other ways of implementation, the coupling-in structure 30 can be arranged at a location corresponding to the upper right corner of the coupling-out structure 40, and the deflecting structure 50 is arranged at a location corresponding to the right side edge or the upper side edge of the coupling-out structure 40.

In a preferred way of implementation of the embodiments of the present disclosure, the optical waveguide structure adopts a single-layer optical waveguide or a multiple-layer optical waveguide; when the optical waveguide structure adopts the multiple-layer optical waveguide, the structure of each layer of the optical waveguide can be the same or different.

Specifically, when the multiple-layer optical waveguide is adopted, if one of the layers of the optical waveguide is provided with a coupling-in structure 30 and a coupling-out structure 40, then each layer of the optical waveguide is provided with a coupling-in structure 30 and a coupling-out structure 40. If one of the layers of the optical waveguide is further provided with a deflecting structure 50, then each layer of the optical waveguide is provided with a deflecting structure 50.

In a preferred way of implementation of the embodiments of the present disclosure, as shown in FIG. 23, a film layer 70 is arranged on an upper side and/or a lower side of the coupling-in structure 30; the film layer 70 includes a dielectric layer and/or a metal layer, the film layer 70 being located between the optical waveguide structure 20 and the coupling-in structure 30, and/or located on one side of the coupling-in structure 30 distant from the optical waveguide structure 20; and/or a film layer 70 is arranged on an upper side and/or a lower side of the coupling-out structure 40; the film layer 70 includes a dielectric layer and/or a metal layer, the film layer 70 being located between the optical waveguide structure 20 and the coupling-out structure 40, and/or located on one side of the coupling-out structure 40 distant from the optical waveguide structure 20.

Specifically, to enhance the optical properties of the optical waveguide device, such as transmission/reflection characteristics, polarization characteristics, and diffraction efficiency distribution characteristics, and characteristics such as mechanical strength characteristics, the film layer 70 is arranged on an upper side and/or a lower side of the coupling-in structure 30 or the coupling-out structure 40.

The film layer 70 adopts a dielectric layer, and the dielectric layer is located between the optical waveguide structure 20 and the coupling-out structure 40, or the dielectric layer is located between the optical waveguide structure 20 and the coupling-in structure 30; and the film layer 70 may also adopt a metal layer, and the metal layer is located on one side of the coupling-out structure 40 opposite to the optical waveguide structure 20, or the metal layer is located on one side of the coupling-in structure 30 opposite to the optical waveguide structure 20. Of course, it is possible to adopt a dielectric layer and also adopt a metal layer.

In a preferred way of implementation of the embodiments of the present disclosure, the coupling-in structure 30 is set at a location corresponding to a side or a corner of the coupling-out structure 40. When the coupling-in structure 30 is set at a location corresponding to a side of the coupling-out structure 40, the light beam is coupled into the coupling-in structure 30 and is coupled out from the coupling-out structure 40 to fulfill one-dimensional or two-dimensional pupil expansion. The "side" includes: the left side, the right side, the upper side, or the lower side. When the coupling-in structure 30 is set at a location corresponding to a corner of the coupling-out structure 40, the light beam is coupled into the coupling-in structure 30 and is coupled out from the coupling-out structure 40 to fulfill two-dimensional pupil expansion. The corner of the coupling-out structure 40 includes: the upper left corner, the lower left corner, the upper right corner, or the lower right corner.

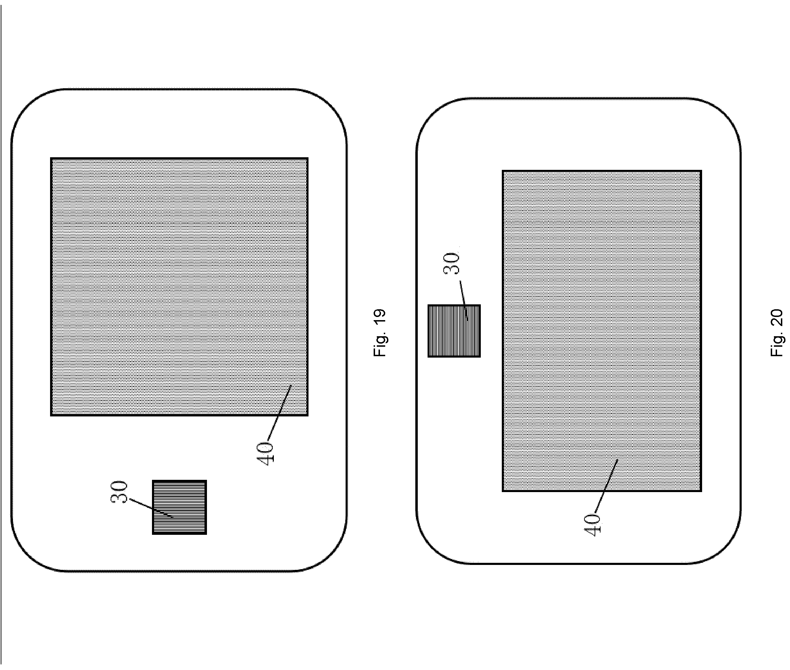

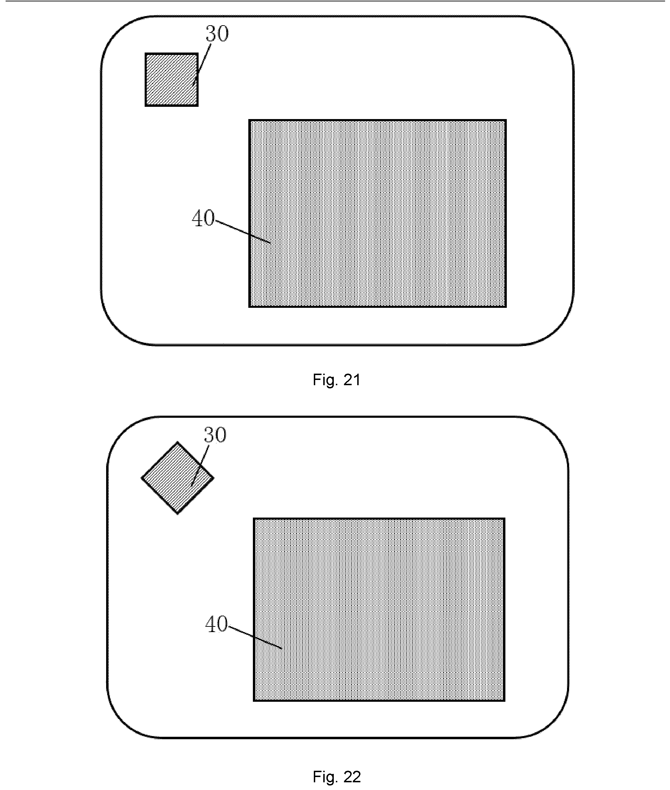

As shown in FIG. 19, the coupling-in structure 30 is arranged at a location corresponding to the left side of the coupling-out structure 40. As shown in FIG. 20, the coupling-in structure 30 is arranged at a location corresponding to the upper side of the coupling-out structure 40. As shown in FIGS. 21 and 22, the coupling-in structure 30 is arranged at a location corresponding to the upper left corner of the coupling-out structure 40.

In a preferred way of implementation of the embodiments of the present disclosure, the coupling-in structure 30 enable the entirety of a light beam to transmit therethrough, such as the shape of the coupling-in structure 30 matching the polygon of the light beam, meaning the coupling-in structure 30 preferably adopts a shape that is the same as the polygon of the light beam. The coupling-in structure 30 can be slightly larger than the polygon of the light beam, such as the coupling-in structure 30 adopting a rectangular shape and the polygon of the light beam being located inside of the rectangular shape. The coupling-in structure 30 may also adopt a circular shape, and some of the polygonal vertexes 11 of the light beam coincide with the circle, while the remaining polygonal vertexes 11 of the light beam are located inside the circle. The coupling-in structure 30 may also include an arc, a rounded angle, or a chamfer 13.

When the coupling-in structure 30 adopts a non-circular shape (for example a polygon, such as a rectangle), the angle of the coupling-in structure 30 can be adjusted. As shown in FIG. 22, the coupling-in structure 30 adopts a rectangle, and the coupling-in structure 30 is rotated 45° relative to the coupling-out structure 40.

Based on the optical waveguide device of any of the above-described embodiments, the present disclosure also provides a preferred embodiment of an AR display apparatus.

The AR display apparatus according to the embodiment of the present disclosure includes: the optical waveguide device according to any of the above-described embodiments, of which the specifics are described above.

It is appreciated that applications of the present disclosure are not limited to the examples provided above. Those having ordinary skill in the art may make modifications or alterations according to the above description, and all such modifications and alterations are considered belonging to the scope of protection that the claims of the present disclosure are pursuing.

**Claims**

1. An optical waveguide device, comprising:

   at least one light source structure capable of generating an initial light beam, wherein the initial light beam has a cross-section of a polygon, the polygon has a number of sides greater than 3;
   an optical waveguide structure(20), located in a light emitting direction of the at least one light source structure; and
   at least one coupling-in structure(30) and at least one coupling-out structure(40), which are arranged in the optical waveguide structure(20);
   wherein the initial light beam is configured to be coupled into the optical waveguide structure(20) through the at least one coupling-in structure(30), and coupled out a plurality of coupling-out light beams(10) from the at least one coupling-out structure(40); and a distance between a polygonal vertex(11) of a polygonal cross-section of one of the coupling-out light beams(10) and an adjacent edge(12) of another polygonal cross-section of an adjacent one of the coupling-out light beams(10) is not greater than a preset threshold; wherein the adjacent edge(12) is an edge of the another polygonal cross-section of the adjacent one of the coupling-out light beams(10) having a smallest distance to the polygonal vertex(11) of the one of the coupling-out light beams(10), and the distance is a non-negative number.

2. The optical waveguide device according to claim 1, wherein the polygon satisfies the following formula:

$$1 \le \frac{\pi \left(\frac{D_{max}}{2}\right)^2}{S} \le 20$$

   wherein $\pi$ is the ratio of a circumference of a circle to the diameter of the circle; Dmax indicates the diameter of a circle circumscribing the polygon; and S indicates the area of the polygon.

3. The optical waveguide device according to claim 1 or 2, wherein the distance between the polygonal vertex(11) of the polygonal cross-section of the one of the coupling-out light beams(10) and the adjacent edge(12) of the another polygonal cross-section of the adjacent one of the coupling-out light beams(10) is 0;

   the polygon is a rectangle or a hexagon having parallel edges; and
   the rectangle satisfies the following formula:

$$1 \le \frac{L}{W} \le 15$$

   where L represents length of long side of the rectangle and W represents length of short sides of the rectangle.

4. The optical waveguide device according to claim 3, wherein the rectangle is a square; and the hexagon having parallel sides is a regular hexagon.

5. The optical waveguide device according to claim 2, wherein the polygon is a quasi-square shape or a quasi-hexagon shape, and the distance between the polygonal vertex(11) of the one of the coupling-out light beams(10) and the adjacent edge(12) of the adjacent one of the coupling-out light beams(10) is 0;

   wherein the quasi-square shape is formed of a regular tetragon having four corners that are chamfered to form chamfered corners;
   the quasi-hexagon shape is formed of a regular hexagon having six corners that are chamfered to form chamfered corners; and
the chamfered corners each comprises multiple straight line segments and/or curved line segments connected together.

6. The optical waveguide device according to claim 1, wherein the at least one light source structure comprises:

an image source structure configured to emit a light beam, the light beam is visible light which comprises at least one of red light, blue light and green light;
a projection device located in a light emitting direction of the image source structure; and
a stop(60) located in a projection direction of the projection device;
wherein the stop(60) comprises an aperture(61) with a polygon shape.

7. The optical waveguide device according to claim 6, wherein the image source structure is selected from at least one of an LED image source structure, an LCD image source structure, a DLP image source structure, an LCOS image source structure, an LBS MEMS image source structure, or an FSD image source structure.

8. The optical waveguide device according to claim 1, wherein the optical waveguide structure(20) comprises at least one of a glass waveguide substrate, a resin waveguide substrate, a plastic waveguide substrate, and a transparent ceramic waveguide substrate; and/or

the at least one coupling-in structure(30) comprises a surface relief grating and/or a volume Bragg grating; the at least one coupling-out structure(40) comprises a surface relief grating and/or a volume Bragg grating; wherein the surface relief grating adopts a fixed refractive index material or a gradient refractive index material; the volume Bragg grating adopts a liquid crystal material or a silver halide material; and/or
a film layer(70) is arranged on an upper side and/or a lower side of the at least one coupling-in structure(30); the film layer(70) comprises a dielectric film and/or a metal film, the film layer(70) being located between the optical waveguide structure(20) and the coupling-in structure(30) and/or located on one side of the at least one coupling-in structure(30) distant from the optical waveguide structure(20); and/or
a film layer(70) is arranged on an upper side and/or a lower side of the coupling-out structure(40); the film layer(70) comprises a dielectric film and/or a metal film, the film layer(70) being located between the optical waveguide structure(20) and the coupling-out structure(40) and/or located on one side of the at least one coupling-out structure(40) distant from the optical waveguide structure(20).

9. The optical waveguide device according to claim 1, wherein the at least one coupling-in structure(30) is arranged on one side or both sides of the optical waveguide structure(20); and/or

the at least one coupling-out structure(40) is arranged on one side or both sides of the optical waveguide structure(20); and/or
the optical waveguide device further comprises a deflecting structure(50) arranged on the optical waveguide structure(20), and the initial light beam coupled into the at least one coupling-in structure(30) is transmitted to the at least one coupling-out structure(40) after passing through the deflecting structure(50), the deflecting structure(50) being arranged on one side or both sides of the optical waveguide structure(20); and/or
the optical waveguide structure(20) is a single-layer optical waveguide or a multiple-layer optical waveguide; wherein when the optical waveguide structure(20) is the multiple-layer optical waveguide, a structure of each layer of the optical waveguide is the same or different.

10. An augmented reality (AR) display apparatus, comprising: the optical waveguide device according to claims 1 to 9.

Fig. 1 (Related Art)

Fig. 2 (Related Art)

Fig. 3

Fig. 4

Fig. 5

Fig. 6

Fig. 7

Fig. 8

10

11

12

Fig. 9

10

11

12

Fig. 10

11

10

12

Fig. 11

Fig. 12

Fig. 13

Fig. 14

Fig. 15

Fig. 16

Fig. 17

Fig. 18

Fig. 19

Fig. 20

30

40

Fig. 21

30

40

Fig. 22

Fig. 23

## INTERNATIONAL SEARCH REPORT

| International application No. |
|---|
| **PCT/CN2023/073887** |

**A. CLASSIFICATION OF SUBJECT MATTER**

G02B6/00(2006.01)i;G02B27/01(2006.01)i;G03B21/00(2006.01)i;G03B21/14(2006.01)i

According to International Patent Classification (IPC) or to both national classification and IPC

**B. FIELDS SEARCHED**

Minimum documentation searched (classification system followed by classification symbols)

G02B,G03B

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 瞳, 扩, 光源, 光斑, 多边形, 四边形, 三角形, 方形, 矩形, 非圆形, 波导, 光栅, 增强现实, 耦合, 输入, 输出, 均匀, pupil?, expand+, light, source, spot?, polygonal, delta, quadrilateral, rectangle, square, triangle, waveguide?, grating?, AR, VR, coupl+, input, output, uniform+

**C. DOCUMENTS CONSIDERED TO BE RELEVANT**

| Category* | Citation of document, with indication, where appropriate, of the relevant passages | Relevant to claim No. |
|---|---|---|
| PX | CN 115494574 A (ZHUHAI MOJIE TECHNOLOGY CO., LTD.) 20 December 2022 (2022-12-20) <br> claims 1-10, description, paragraphs 0070-0123, and figures 1-23 | 1-10 |
| A | CN 109239835 A (CHENGDU IDEALSEE TECHNOLOGY CO., LTD.) 18 January 2019 (2019-01-18) <br> entire document | 1-10 |
| A | CN 104570353 A (ZHEJIANG UNIVERSITY) 29 April 2015 (2015-04-29) <br> entire document | 1-10 |
| A | CN 211826729 U (GOOLTON TECHNOLOGY CO., LTD.) 30 October 2020 (2020-10-30) <br> entire document | 1-10 |
| A | CN 107923600 A (LEIA INC.) 17 April 2018 (2018-04-17) <br> entire document | 1-10 |
| A | US 2020012095 A1 (MAGIC LEAP, INC.) 09 January 2020 (2020-01-09) <br> entire document | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 March 2023** | **23 March 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/073887**

**C.    DOCUMENTS CONSIDERED TO BE RELEVANT**

| Category* | Citation of document, with indication, where appropriate, of the relevant passages | Relevant to claim No. |
|---|---|---|
| A | CN 110531525 A (SVG OPTRONICS, CO., LTD. et al.) 03 December 2019 (2019-12-03) entire document | 1-10 |

Form PCT/ISA/210 (second sheet) (July 2022)

EP 4 471 469 A1

**INTERNATIONAL SEARCH REPORT**
Information on patent family members

International application No.

**PCT/CN2023/073887**

| Patent document cited in search report | | | Publication date (day/month/year) | Patent family member(s) | | | Publication date (day/month/year) |
|---|---|---|---|---|---|---|---|
| CN | 115494574 | A | 20 December 2022 | None | | | |
| CN | 109239835 | A | 18 January 2019 | None | | | |
| CN | 104570353 | A | 29 April 2015 | None | | | |
| CN | 211826729 | U | 30 October 2020 | CN | 111474711 | A | 31 July 2020 |
| | | | | CN | 111474711 | B | 06 April 2021 |
| CN | 107923600 | A | 17 April 2018 | HK | 1253359 | A1 | 14 June 2019 |
| | | | | CA | 2993850 | A1 | 09 March 2017 |
| | | | | CA | 2993850 | C | 09 November 2021 |
| | | | | JP | 2018537698 | A | 20 December 2018 |
| | | | | JP | 6804523 | B2 | 23 December 2020 |
| | | | | KR | 20180039050 | A | 17 April 2018 |
| | | | | KR | 102233209 | B1 | 26 March 2021 |
| | | | | WO | 2017041079 | A1 | 09 March 2017 |
| | | | | EP | 3344917 | A1 | 11 July 2018 |
| | | | | EP | 3344917 | A4 | 01 May 2019 |
| | | | | TW | 201812409 | A | 01 April 2018 |
| | | | | TWI | 638212 | B | 11 October 2018 |
| | | | | US | 2018188691 | A1 | 05 July 2018 |
| | | | | US | 10802443 | B2 | 13 October 2020 |
| | | | | US | 2018196194 | A1 | 12 July 2018 |
| | | | | CN | 107923600 | B | 14 April 2020 |
| US | 2020012095 | A1 | 09 January 2020 | US | 11106033 | B2 | 31 August 2021 |
| | | | | US | 2022057630 | A1 | 24 February 2022 |
| | | | | EP | 3818409 | A1 | 12 May 2021 |
| | | | | EP | 3818409 | A4 | 13 April 2022 |
| | | | | WO | 2020010271 | A1 | 09 January 2020 |
| | | | | JP | 2021528702 | A | 21 October 2021 |
| CN | 110531525 | A | 03 December 2019 | CN | 208805627 | U | 30 April 2019 |

Form PCT/ISA/210 (patent family annex) (July 2022)

23